# EUROPEAN PATENT SPECIFICATION

(11) **EP 2 040 330 B1**
(45) Date of publication and mention of the grant of the patent: **24.02.2010**
(21) Application number: 07291125.8
(22) Date of filing: 21.09.2007
(51) Int. Cl.: H01Q 1/28, H01Q 3/01, H01Q 15/14, H01Q 15/16, H01Q 19/19, G02B 26/08

(54) **Reconfigurable reflector for radio-frequency waves**
Wiederkonfigurierbarer Reflektor für Radiofrequenzwellen
Réflecteur reconfigurable pour ondes de radiofréquence

(43) Date of publication of application: 25.03.2009
(73) Proprietor: AGENCE SPATIALE EUROPEENNE, 75738 Paris Cedex 15 (FR)
(72) Inventor: Scolamiero, Lucio Gerardo, 2241 RZ Wassenaar (NL); Sabbadini, Marco, 2318 MT Leiden (NL)
(74) Representative: Priori, Enrico

(56) References cited:
- FR-A- 2 648 278
- JP-A- 60 032 411
- US-A- 4 492 431
- US-A- 4 940 318
- US-A- 5 434 697
- US-A- 5 440 320
- US-A1- 2003 147 162
- COMPOSTIZO CARLOS ET AL: "Adjustable subreflector mechanism" EUROPEAN SPACE AGENCY, (SPECIAL PUBLICATION) ESA SP; 12TH EUROPEAN SPACE MECHANISMS AND TRIBOLOGY SYMPOSIUM (ESMATS) AUGUST 2007, no. SP-653, August 2007 (2007-08), XP001538030
- PINO ANTONIO GARCIA ET AL: "A dual reflector antenna with adjustable subreflector for hybrid mechanical-electronic scanning" EUROPEAN SPACE AGENCY, (SPECIAL PUBLICATION) ESA SP; PROC. EUCAP 2006, no. SP-626, October 2006 (2006-10), XP002469030
- THEUNISSEN W H ET AL: "Reconfigurable contour beam reflector antennas using adjustable subreflector and adjustable single feed" MICROWAVE AND OPTICAL TECHNOLOGY LETTERS WILEY USA, vol. 21, no. 6, 20 June 1999 (1999-06-20), pages 436-446, XP002469031 ISSN: 0895-2477
- GREGORY WASHINGTON ET AL: "Design, Modeling, and Optimization of Mechanically Reconfigurable Aperture Antennas" IEEE TRANSACTIONS ON ANTENNAS AND PROPAGATION, IEEE SERVICE CENTER, PISCATAWAY, NJ, US, vol. 50, no. 5, May 2002 (2002-05), XP011068538 ISSN: 0018-926X
- IMBRIALE W A: "Distortion compensation techniques for large reflector antennas" AEROSPACE CONFERENCE, 2001, IEEE PROCEEDINGS. MAR. 10-17, 2001', PISCATAWAY, NJ, USA,IEEE, vol. 2, 20 March 2001 (2001-03-20), pages 799-805, XP010548304 ISBN: 0-7803-6599-2

## Description

The invention relates to a reconfigurable reflector adapted for reflecting radio-frequency waves, and more specifically to a mechanically reconfigurable reflector for a space-borne microwave antenna system.

In the field of space telecommunication, there is a strong demand for in-orbit operational flexibility of antenna system. In particular, it is highly desirable to be able to modify, during operation, the antenna coverage parameters: beam shape, contour and pointing.

Dynamical reconfiguration of an antenna system can be achieved by using a microwave feed array provided with a variable beam-forming network, based on the principle of aperture synthesis. However, beam-forming networks are heavy, complex and costly, and introduce high power losses.

Another known possibility is to use an antenna system comprising a plurality of selectable (sub)reflectors, each corresponding to a different beam shape. A system according to this principle is described by French Patent Application FR2648278. The drawbacks of this solution are obvious: only a finite number of possible beam shapes can be selected, the system is heavy, mechanically complex and insufficiently reliable.

A promising alternative would consist in actively changing the shape of a reflective surface of an antenna reflector or sub-reflector. A number of attempts of realizing a practical reconfigurable antenna system based on this principle have already been made, but none has led to fully satisfactory results.

Other attempts were based on piezoelectric actuated patches bonded or embedded into the reflector structure to achieve an active control of the reflector shape itself, utilizing a "bi-metallic" effect. Those attempts have resulted in insufficient reflector surface displacement fields, critical system complexity and still unresolved technical difficulties (e.g. long term compatibility of piezo-patches with supporting structure, overall thermo-elastic stability, high voltage actuation ...).

A different approach to a mechanically reconfigurable reflector consists in using a number of linear actuators, positioned on the back side of the reflector and acting in a push / pull mode to deform the front, reflective surface into the desired shape. This technique is indeed currently used for actively controlled optical telescopes mirrors see, for example, US 4, 940, 318. However, mirror materials and structures for optical applications are substantially different from the ones typically used for lower frequencies, e.g. microwaves up to the V-band, and so are the mechanical requirements in terms of displacement and actuation bandwidth. This makes it difficult to transfer technological solution from one field to the other.

The paper "Reconfigurable contour beam reflector antennas using adjustable subreflector and adjustable single Feed" by W.H. Theunissen et al. (Microwave and Optical Technology Letters, 21, No 6, June 20, 1999, pp.436-446) discloses a mechanically reconfigurable microwave reflector whose shape is controlled by high-deflection piezoelectric actuators.

US Patent 5,440,320 discloses a reconfigurable antenna reflector comprising a cylindrical, drum-like support structure having a flat bottom and a cylindrical side wall, and an elastically deformable reflective membrane affixed to said cylindrical side wall and extending above said flat bottom. Up to 100 linear actuators extend from the flat bottom of the support structure to the elastically deformable reflective membrane; said actuators can be operated to deform said membrane by exerting a push-pull action on predetermined points thereof.

A theoretical description of the operation of a reconfigurable antenna reflector of this kind is provided by the paper "Light-weight reconformable reflector antenna dish" by Knud Pontoppidan, (Proc. of the 28th ESA Antenna Workshop on Space Antenna Systems and Technologies, May 2005).

Patent US 5,440,320 is focused on overcoming the so-called "pillow effect", i.e. an excess deformation of the membrane on the actuator attachment points, but it does not address other implementation problems which make the reconfigurable antenna reflector impractical for space applications.

The main drawbacks of the reflector of patent US 5,440,320 are its mass, its mechanical complexity and its insufficient thermo-elastical stability.

The present invention consists of a new mechanical architecture for a reconfigurable reflector overcoming at least some of the drawbacks of the prior art.

The main idea of the invention consists in integrating, in a very compact and thermo-elastically stable fashion, the deformable reflective membrane and the linear actuators, together with the reflector supporting structure itself.

Another distinguishing feature of the invention is the utilization of a standard, composite sandwich technology based, monolithic reflector dish, as the supporting structure on which the different system components are integrated.

Still another distinguishing feature of the invention is the idea of embedding linear actuators into the reflector structure, utilizing standard structural insert technology.

According to the invention, the deformable membrane duplicates and overlaps the reflector front skin, but remains physically detached from it. Advantageously, the deformable membrane can be realized on the same mould used for the reflector shell curing process.
Other advantageous features of the invention are:
- Utilization of a reflective membrane which is suitably pre-shape to the desires undeformed reflector shape.
- Utilization of a standard reflector sandwich structure and its internal volume, both for accommodating and supporting the mechanical actuators and to provide conformal support to the reflective membrane
- Utilization of miniaturized linear actuators embedded into the reflector sandwich structure, by means of conventional technologies already in use for sandwich insert potting applications.

All the above points cooperate in the achievement of major advantages with respect to the present state of the art.

The main advantages of this new architecture consist in its technical feasibility and economical effectiveness, which are achieved by means of:
- Maximum utilization of standard technologies and materials.
- Minor impact on standard reflector manufacturing process: only standard technology is required.
- The number of control points (and therefore of actuators) is minimized because essentially determined by beam shape re-configuration needs starting from the as-manufactured shape.
- Minimum impact in terms of reflector envelope and accommodation requirements: the actuators are embedded within the body of the reflector, thus leaving the overall occupied volume and thickness almost unchanged.
- Minimum impact on the mechanical properties of the reflector, and in particular on its stiffness.
- High thermo-elastic stability, since the main structural element is realized with standard high stability technology, and the actuators/membrane interfaces are internal and shielded by the sandwich structure itself. Conventional thermal protection technologies can be used for a (sub) reflector being produced according to this invention.
- It is possible to define and implement classes of solutions (product lines) suitable for different frequency band and reconfiguration needs based on the same architecture with different types of membranes and actuators.

An object of the present invention is thus a reconfigurable reflector adapted reflecting for radio-frequency waves, comprising: a rigid support element having a front surface; an elastically deformable reflective membrane lying over the front surface of said rigid support element; and a plurality of linear actuators for deforming said reflective membrane by operating on predetermined points thereof; wherein said linear actuators are embedded within said rigid support element, and have shafts protruding by the front surface thereof for operating on predetermined points of said elastically deformable reflective membrane.

According to particular embodiments of the invention:
- Said elastically deformable reflective membrane, in an undeformed state thereof, can contact the front surface of said rigid support element and matches its shape.
- Said front surface of said rigid support element can have a three-dimensional shape chosen among: a planar shape, a cylindrical shape, a spherical shape, a paraboloidal shape, a hyperboloidal shape, an ellipsoidal shape.
- Said elastically deformable reflective membrane can have a diameter comprised between 200 mm and 2 m.
- Said elastically deformable reflective membrane can be affixed to said rigid support element.
- Said rigid support element can comprise a reflector dish having a sandwich structure, in particular having a honeycomb or foam core. The sandwich structure of said reflector dish can be essentially constituted of a material chosen between a fiber-reinforced plastic material, a light metal such as aluminum and a light alloy, and have a thickness comprised between 15 mm and 30 mm.
- Said linear actuators can be piezoelectric actuators.
- The reconfigurable reflector of the invention can comprise at least ten and preferably between ten and one hundred of said linear actuators.
- The shafts of said linear actuators can extend perpendicularly from the front surface of the rigid support element.
- The shafts of said linear actuators can be axially movable, with a stroke of at least 20 mm, between a retracted position, in which said shafts are flush with the front surface of the rigid support element or behind it, and a protruded position, in which said shafts protrude from said front surface.
- The shafts of said linear actuators can be axially movable with an accuracy of better than 50 µm.
- Said reflector can by a microwave reflector, and said elastically deformable reflective membrane can be adapted for reflecting microwaves up to the V-band.
- Said elastically deformable reflective membrane adapted for reflecting microwaves can comprise a membrane made of a fiber-reinforced plastic material, unidirectional multilayer, woven fabric, open wave tri-axial fabric, or a membrane made of a metallic mesh.
- The reconfigurable reflector of the invention can further comprise closed-loop control means for controlling the operation of said linear actuator in order to obtain a predetermined deformed shape of said elastically deformable reflective membrane.

Another object of the invention is a microwave antenna system having a reconfigurable beam pattern, comprising a device for emitting and/or receiving electromagnetic waves and at least a reconfigurable reflector as described above, said reconfigurable reflector cooperating with said device for determining said reconfigurable beam pattern of the antenna system. In particular, said reconfigurable reflector can be a subreflector, and the antenna system can further comprise a non-reconfigurable main reflector cooperating with said subreflector for determining said reconfigurable beam pattern of the antenna system.

Still another object of the invention is a spacecraft telecommunication payload comprising such an antenna system.

Additional features and advantages of the present invention will become apparent from the subsequent description, taken in conjunction with the accompanying drawings, which show:
- Figure 1, a view in section of the rigid support element with a linear actuator embedded in it;
- Figure 2, schematically, a view in section of the reconfigurable reflector of the invention, comprising a rigid support element and an elastically deformable reflective membrane;
- Figure 2A, a detail of figure 2; and
- Figure 3, schematically, a reconfigurable antenna system according to an embodiment of the invention.

The rigid support element 10 of the reconfigurable reflector of the invention is a standard reflector dish having e.g. a parabolic shape, having a sandwich structure comprising a honeycomb core 11 disposed between a back 12 and a front 13 skin. The honeycomb core 11 can be made of CFRP (carbon-fiber reinforced plastic), which is the preferred embodiment, or of a light metal or alloy, such as aluminum, or of low thermal expansion foam. Its thickness can be comprised between 15 and 30 mm, and will typically be of the order of 20 mm. The support element can typically have a diameter (or maximal lateral dimension) comprised between 20 cm and 2 m.

A number of holes or cavities 14 are opened in the body of the support element 10 for accommodating the linear actuators 20. The number and position of said cavities depend on the shape-change requirements of the reflectors, as described by the above-cited paper by Knud Pontoppidan; the number of actuators can be typically comprised between ten and one hundred. The cavities or holes are obtained by drilling the sandwich of support element 10 where resin potting 15 is locally applied. According to a preferred embodiment of the invention, holes 14 are essentially cylindrical, in order to allow mounting of the actuators 20 form either sides. According to an alternative embodiment (non-represented on the figures), holes can be larger on the front surface and be limited to the need for routing the actuator harness 23 (and possibly, for allowing retraction of the actuator shaft) on the back surface.

A linear actuator 20, preferably of the piezoelectric kind, is located inside each cavity 14, its body 21 being directly glued to the cavity walls or mechanically fastened to a structural "through-hole" metallic insert, placed in the cavity. The latter type of actuator mounting (with insert) would be preferable because it allows for easy removal of the actuator.

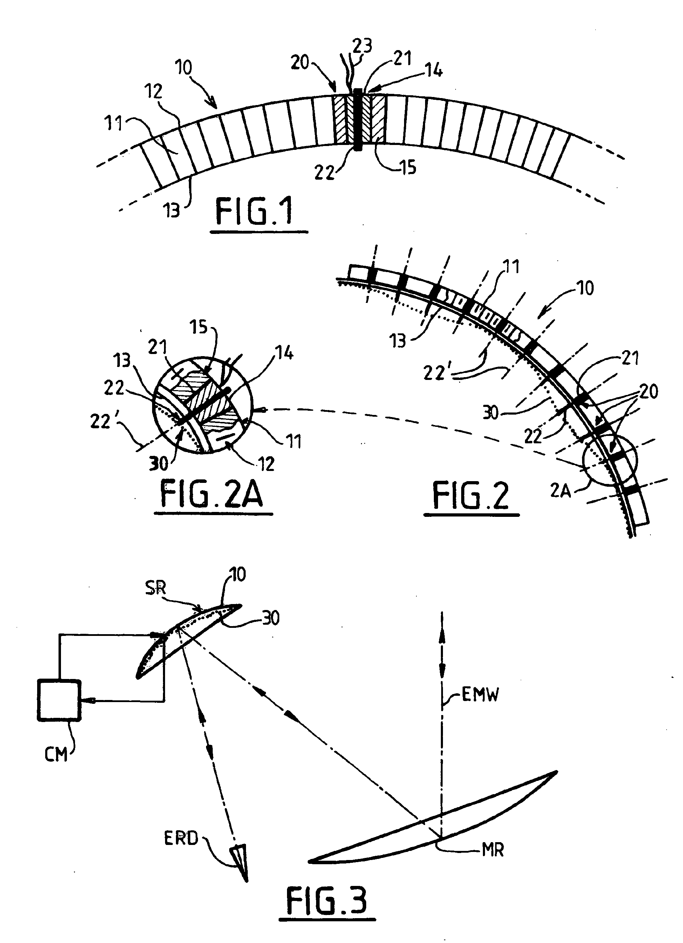

Actuators 20 have a linearly translating shaft 22 whose axis 22' is substantially perpendicular to the front surface 13 of the support element 10. As represented on figure 1, the shafts 22 can extend from both sides of the corresponding actuator body 22, but this is by no means essential.

Shafts 22 are axially movable between a retracted position, in which said shafts are flush with the front surface 13 or behind it, and a protruded position, in which they protrude from said front surface.
The actuators 20 have the following typical requirements:
- max output force approx 10.0 N
- max stroke approx 20 mm
- actuator main body length about 20 mm (or less)
- external diameter about 10 mm (or less)

A plurality of mini linear actuators exist commercially, from conventional electrical motors with lead/ball screw coupling for linear motion transformation, to direct drive linear motors based on piezo effect: "inch-worms" (EXFO Burleigh Products Group Inc.), "inertial" (Klocke Nanotechnik), "squiggle" (New Scale Technologies Inc.) type, and many other under development.

Although use of conventional electrical motors plus screw-type linear drives can be envisaged, piezo-based actuators are strongly preferred. Major advantages of piezoelectric actuators are: simplicity, miniaturization, variety of new concepts based on unlimited stroke possibilities (limited only by the output shaft length), direct drive and no-power holding capability.

The reflective membrane 30 can be realized in thin CFRP technology by utilizing (e.g.) open wave tri-axial fabrics, which have been proved suitable for RF applications up to Ka-band, are ultra stable (coefficient of thermal expansion below 1.0 part per million and highly isotropic) and still have low membrane stiffness due to the geometrical features of the weaving.

Diameter sizes in the range 200-300 mm, up to 1.0 - 2.0 m can be envisaged as feasible with the presented architecture. Typically, for a sub-reflector application, the diameter can be between 300 mm and 600 mm.

Also combination of alternative materials, with better deformability properties, can be utilized, e.g. aramid fabrics with radio-frequency reflective element embedded or etched or bonded onto the surface as commonly utilized for "dual gridded" antenna applications or "dichroic" sub-reflector applications. Another possibility is to use highly deformable silicon-based CFRP membranes under ESA development ("Concepts and Technologies for Precision Unfurlable Reflectors", Baier, H. et al., Proceedings of The 25th ESA Antenna Workshop on Satellite Antenna Technology (ESA VPP-202), 2002)

For lower frequency band applications (up to Ku-band), metallic grid / metallic mesh combinations could also be used, but still with caution concerning thermo-elastic stability aspects (metal has very high coefficient of thermal expansion) and inter-modulation-products (critical when metal-metal sliding contacts are present for certain applications).

The rest shape of the reflecting membrane and therefore the shape of the supporting sandwich are to be determined following an analysis of the re-configuration envelope on the basis of the radio-frequency requirements. The resulting shape is in all respect similar to that of classical shaped-reflector antenna. Therefore it does not pose any additional implementation constraints.

The connection between the reflective membrane and the actuator output shaft would be realized by means of bonding, mechanical fastening, or with alternative techniques, also depending on the output shaft material and termination.

The connection between the reflective membrane and the sandwich would be realized by means of cleats at outer edge leaving adequate rotational flexibility (especially in case re-shaping of outer edges areas).

Different means of connecting the reflective membrane to the sandwich supporting structure can be envisaged, based on the application details. It is also possible to connect the membrane only to the actuator shafts, and not to the support element.

Figures 2 and 2A show how the axial displacement of the actuator shafts 22 can deform the reflecting membrane 30, thus allowing reconfiguration of the reflector. These figures are not drawn to scale, the membrane deformation being exaggerated by a factor of about ten.

A distinct advantage of the invention with respect to the prior art is that the rest shape of the reflective membrane 30 already matches that of a "basic" reflector, typically having a cylindrical, spherical paraboloidal, hyperboloidal, ellipsoidal shape or any other smooth and regular one; actuators 20 are only required to superimpose a comparative small deformation field to said basic reflector shape. On the contrary, in the case of Patent US 5,440,320, the actuators fully determine the shape of the reflecting membrane, and therefore they need a much larger stroke or additional spacers.

Figure 3 represents an antenna system having a reconfigurable beam pattern, based on the principle of the invention. The antenna system comprises a device ERD for emitting and/or receiving electromagnetic waves EMW (more particularly, microwaves up to the V-band), a secondary reflector SR and a larger main reflector MR arranged according to the principle of a Gregorian telescope. Sub-reflector SR is a reconfigurable element as described above, the shape of the reflective membrane 30 being controlled in closed-loop by suitable control means CM.

An important element of the system is its calibration and the implementation of a suitable actuator position control loop to achieve the prescribed membrane shape. The re-configurable sub-reflector would need to be fully characterized, on ground, in terms of correlation between the actuator displacements field, membrane surface physical shape, and overall antenna pattern.

Finite element analysis, accurate surface metrology, electrical analysis and synthesis tools and radio frequency measurements would be instrumental in this phase to calibrate the system and ensure its robustness.

Once the correlation between desired antenna pattern and actuator displacement fields is established on ground, means CM for controlling the actuator positions in orbit need to be implemented. The accuracy to be reached on the actuators displacements is in the order of 20µm to 50µm. Basically three approaches can be envisaged:
a) To implement in the linear actuators a position sensor (based on inductive or most likely optical technology), and force the membrane to reach a prescribed shape by commanding each actuator to a prescribe position. By following this approach, of course, a number of undesired membrane distortions, due to e.g. thermal, ageing, gravity effects, would not be compensated.
b) To implement an in-orbit reflector surface measurement capability, and tuning the actuators positions until the membrane surface shape has reached its prescribed contour.
   Recent advances in the field of miniaturized cameras and CCD sensor technology increase the interest for this approach.
c) The third possibility would be to tune the actuator positions by direct radio frequency measurements to the generated RF pattern. This can be achieved by using the same mathematical techniques used to synthesize the desired reflector shape from the required antenna beam characteristics as part of the normal antenna design.

The antenna system of figure 3 is particularly suitable for being applied to a spacecraft telecommunication payload. Indeed, conventional reflector MR can have a large diameter, as required for space applications, while reconfiguration capability is provided by the smaller sub-reflector. Optionally, sub-reflector SR can even have a planar shape, focusing being entirely provided by main reflector MR.
However, different architectures are also possible: main reflector MR or both the main and secondary reflectors can be reconfigurable. A device according to the invention can also be used in a single-reflector configuration.

## Claims

1. A reconfigurable reflector adapted for reflecting radio-frequency waves, comprising:
- a rigid support element (10) having a front surface (13);
- an elastically deformable reflective membrane (30) lying over the front surface of said rigid support element; and
- a plurality of linear actuators (20) for deforming said reflective membrane by operating on predetermined points thereof;
**characterized in that**:
- said linear actuators are embedded within said rigid support element, and have shafts (22) protruding by the front surface thereof for operating on predetermined points of said elastically deformable reflective membrane.

2. A reconfigurable reflector for radio-frequency waves according to claim 1, wherein said elastically deformable reflective membrane, in an undeformed state thereof, contacts the front surface of said rigid support element and matches its shape.

3. A reconfigurable reflector for radio-frequency waves according to claim 2, wherein said front surface of said rigid support element has a three-dimensional shape chosen among: a planar shape, a cylindrical shape, a spherical shape, a paraboloidal shape, a hyperboloidal shape, an ellipsoidal shape.

4. A reconfigurable reflector for radio-frequency waves according to any of the preceding claims, wherein said elastically deformable reflective membrane has a diameter comprised between 200 mm and 2 m.

5. A reconfigurable reflector for radio-frequency waves according to any of the preceding claims, wherein said elastically deformable reflective membrane is affixed to said rigid support element.

6. A reconfigurable reflector for radio-frequency waves according to any of the preceding claims, wherein said rigid support element comprises a reflector dish having a sandwich structure.

7. A reconfigurable reflector for radio-frequency waves according to claim 6, wherein the sandwich structure of said reflector dish has a honeycomb or foam core (11).

8. A reconfigurable reflector for radio-frequency waves according to claim 6 or 7, wherein the sandwich structure of said reflector dish is essentially constituted of a material chosen between a fiber-reinforced plastic material, a light metal such as aluminum and a light alloy.

9. A reconfigurable reflector for radio-frequency waves according to any of claim 6 to 8, wherein the sandwich structure of said reflector dish has a thickness comprised between 15 mm and 30 mm.

10. A reconfigurable reflector for radio-frequency waves according to any of the preceding claims, wherein said linear actuators are piezoelectric actuators.

11. A reconfigurable reflector for radio-frequency waves according to any of the preceding claims, comprising at least ten and preferably between ten and one hundred of said linear actuators.

12. A reconfigurable reflector for radio-frequency waves according to any of the preceding claims, wherein the shafts of said linear actuators extend perpendicularly from the front surface of the rigid support element

13. A reconfigurable reflector for radio-frequency waves according to any of the preceding claims, wherein the shafts of said linear actuators are axially movable, with a stroke of at least 20 mm, between a retracted position, in which said shafts are flush with the front surface of the rigid support element or behind it, and a protruded position, in which said shafts protrude from said front surface.

14. A reconfigurable reflector for radio-frequency waves according to any of the preceding claims, wherein the shafts of said linear actuators are axially movable with an accuracy of better than 50 µm.

15. A reconfigurable reflector for microwaves according to any of the preceding claims, wherein said elastically deformable reflective membrane is adapted for reflecting microwaves up to the V-band.

16. A reconfigurable reflector for microwaves according to claim 15, wherein said elastically deformable reflective membrane comprises a membrane made of a fiber-reinforced plastic material, by utilizing open wave tri-axial fabric.

17. A reconfigurable reflector for microwaves according to claim 15, wherein said elastically deformable reflective membrane comprises a membrane made of a metallic mesh.

18. A reconfigurable reflector for radio-frequency waves according to any of the preceding claims, further comprising closed-loop control means (CM) for controlling the operation of said linear actuator in order to obtain a predetermined deformed shape of said elastically deformable reflective membrane.

19. A microwave antenna system having a reconfigurable beam pattern, comprising a device (ERD) for emitting and/or receiving microwaves (EMW) and at least a reconfigurable microwave reflector (SR) according to any of the preceding claims, said reconfigurable reflector cooperating with said device for determining said reconfigurable beam pattern of the antenna system.

20. A microwave antenna system according to claim 19, wherein said reconfigurable microwave reflector is a subreflector (SR), and further comprising a non-reconfigurable main reflector (MR) cooperating with said subreflector for determining said reconfigurable beam pattern of the antenna system.

21. A spacecraft telecommunication payload comprising a microwave antenna system according to claim 19 or 20.

## Patentansprüche

1. Umkonfigurierbarer Reflektor, der zum Reflektieren von Funkwellen ausgelegt ist und der umfasst:
- ein starres Stützelement (10) mit einer vorderen Oberfläche (13);
- eine elastisch verformbare, reflektierende Membran (30), die über der vorderen Oberfläche des starren Stützelements liegt; und
- eine Vielzahl von linearen Stellgliedern (20) zum Verformen der reflektierenden Membran durch Einwirken auf vorbestimmte Punkte derselben;
**dadurch gekennzeichnet, dass**:
- die linearen Stellglieder in das starre Stützelement eingebettet sind und Schäfte (22) aufweisen, die durch die vordere Oberfläche derselben hervorragen, um auf vorbestimmte Punkte der elastisch verformbaren, reflektierenden Membran einzuwirken.

2. Umkonfigurierbarer Reflektor für Funkwellen nach Anspruch 1, wobei die elastisch verformbare, reflektierende Membran in einem unverformten Zustand derselben die vordere Oberfläche des starren Stützelements berührt und sich an seine Form anpasst.

3. Umkonfigurierbarer Reflektor für Funkwellen nach Anspruch 2, wobei die vordere Oberfläche des starren Stützelements eine dreidimensionale Form aufweist, die unter folgenden ausgewählt ist: einer planaren Form, einer zylindrischen Form, einer sphärischen Form, einer Parabolform, einer Hyperbolform, einer Ellipsoidform.

4. Umkonfigurierbarer Reflektor für Funkwellen nach einem der vorangehenden Ansprüche, wobei die elastisch verformbare, reflektierende Membran einen Durchmesser zwischen 200 mm und 2 m aufweist.

5. Umkonfigurierbarer Reflektor für Funkwellen nach einem der vorangehenden Ansprüche, wobei die elastisch verformbare, reflektierende Membran an dem starren Stützelement befestigt ist.

6. Umkonfigurierbarer Reflektor für Funkwellen nach einem der vorangehenden Ansprüche, wobei das starre Stützelement eine Reflektorschüssel mit einer Sandwichstruktur umfasst.

7. Umkonfigurierbarer Reflektor für Funkwellen nach Anspruch 6, wobei die Sandwichstruktur der Reflektorschüssel einen Bienenwaben- oder Schaumkern (11) aufweist.

8. Umkonfigurierbarer Reflektor für Funkwellen nach Anspruch 6 oder 7, wobei die Sandwichstruktur der Reflektorschüssel im Wesentlichen aus einem Material besteht, das aus einem faserverstärkten Kunststoffmaterial, einem Leichtmetall wie z.B. Aluminium und einer Leichtlegierung ausgewählt ist.

9. Umkonfigurierbarer Reflektor für Funkwellen nach einem der Ansprüche 6 bis 8, wobei die Sandwichstruktur der Reflektorschüssel eine Dicke zwischen 15 mm und 30 mm aufweist.

10. Umkonfigurierbarer Reflektor für Funkwellen nach einem der vorangehenden Ansprüche, wobei die linearen Stellglieder piezoelektrische Stellglieder sind.

11. Umkonfigurierbarer Reflektor für Funkwellen nach einem der vorangehenden Ansprüche mit mindestens zehn und vorzugsweise zwischen zehn und einhundert der linearen Stellglieder.

12. Umkonfigurierbarer Reflektor für Funkwellen nach einem der vorangehenden Ansprüche, wobei sich die Schäfte der linearen Stellglieder senkrecht von der vorderen Oberfläche des starren Stützelements erstrecken.

13. Umkonfigurierbarer Reflektor für Funkwellen nach einem der vorangehenden Ansprüche, wobei die Schäfte der linearen Stellglieder mit einem Hub von mindestens 20 mm zwischen einer zurückgezogenen Position, in der die Schäfte mit der vorderen Oberfläche des starren Stützelements bündig sind oder hinter dieser liegen, und einer vorstehenden Position, in der die Schäfte von der vorderen Oberfläche vorstehen, axial beweglich sind.

14. Umkonfigurierbarer Reflektor für Funkwellen nach einem der vorangehenden Ansprüche, wobei die Schäfte der linearen Stellglieder mit einer Genauigkeit von besser als 50 µm axial beweglich sind.

15. Umkonfigurierbarer Reflektor für Mikrowellen nach einem der vorangehenden Ansprüche, wobei die elastisch verformbare, reflektierende Membran zum Reflektieren von Mikrowellen bis zum V-Band ausgelegt ist.

16. Umkonfigurierbarer Reflektor für Mikrowellen nach Anspruch 15, wobei die elastisch verformbare, reflektierende Membran eine Membran umfasst, die aus einem faserverstärkten Kunststoffmaterial unter Verwendung eines lockeren triaxialen Gewebes hergestellt ist.

17. Umkonfigurierbarer Reflektor für Mikrowellen nach Anspruch 15, wobei die elastisch verformbare, reflektierende Membran eine Membran umfasst, die aus einem Metallnetz besteht.

18. Umkonfigurierbarer Reflektor für Funkwellen nach einem der vorangehenden Ansprüche, welcher ferner eine Regeleinrichtung (CM) in geschlossener Schleife zum Regeln des Betriebs des linearen Stellgliedes umfasst, um eine vorbestimmte verformte Form der elastisch verformbaren, reflektierenden Membran zu erhalten.

19. Mikrowellenantennensystem mit einem umkonfigurierbaren Strahlmuster mit einer Vorrichtung (ERD) zum Emittieren und/oder Empfangen von Mikrowellen (EMW) und mindestens einem umkonfigurierbaren Mikrowellenreflektor (SR) nach einem der vorangehenden Ansprüche, wobei der umkonfigurierbare Reflektor mit der Vorrichtung zusammenwirkt, um das umkonfigurierbare Strahlmuster des Antennensystems zu bestimmen.

20. Mikrowellenantennensystem nach Anspruch 19, wobei der umkonfigurierbare Mikrowellenreflektor ein Nebenreflektor (SR) ist, und ferner mit einem nicht-umkonfigurierbaren Hauptreflektor (MR), der mit dem Nebenreflektor zusammenwirkt, um das umkonfigurierbare Strahlmuster des Antennensystems zu bestimmen.

21. Raumfahrt-Telekommunikationsnutzlast mit einem Mikrowellenantennensystem nach Anspruch 19 oder 20.

## Revendications

1. Réflecteur reconfigurable adapté pour réfléchir des ondes de radiofréquence, comprenant :
- un élément de support rigide (10) possédant une surface avant (13) ;
- une membrane réfléchissante déformable de façon élastique (30) recouvrant la surface avant dudit élément de support rigide ; et
- une pluralité d'actionneurs linéaires (20) pour déformer ladite membrane réfléchissante en agissant sur des points prédéterminés de celle-ci ;
**caractérisé en ce que** :
- lesdits actionneurs linéaires sont incorporés à l'intérieur dudit élément de support rigide, et possèdent des tiges (22) faisant saillie par la surface avant de ceux-ci pour agir sur des points prédéterminés de ladite membrane réfléchissante déformable de façon élastique.

2. Réflecteur reconfigurable pour ondes de radiofréquence selon la revendication 1, dans lequel ladite membrane réfléchissante déformable de façon élastique, dans un état non déformé de celle-ci, entre en contact avec la surface avant dudit élément de support rigide et s'adapte à sa forme.

3. Réflecteur reconfigurable pour ondes de radiofréquence selon la revendication 2, dans lequel ladite surface avant dudit élément de support rigide possède une forme tridimensionnelle choisie parmi : une forme plane, une forme cylindrique, une forme sphérique, une forme paraboloïdale, une forme hyperboloïdale, une forme ellipsoïdale.

4. Réflecteur reconfigurable pour ondes de radiofréquence selon une quelconque des revendications précédentes, dans lequel ladite membrane réfléchissante déformable de façon élastique possède un diamètre compris entre 200 mm et 2 m.

5. Réflecteur reconfigurable pour ondes de radiofréquence selon une quelconque des revendications précédentes, dans lequel ladite membrane réfléchissante déformable de façon élastique est fixée audit élément de support rigide.

6. Réflecteur reconfigurable pour ondes de radiofréquence selon une quelconque des revendications précédentes, dans lequel ledit élément de support rigide comprend un plateau réflecteur possédant une structure sandwich.

7. Réflecteur reconfigurable pour ondes de radiofréquence selon la revendication 6, dans lequel la structure sandwich dudit plateau réflecteur possède une partie centrale en nid d'abeille ou mousse (11).

8. Réflecteur reconfigurable pour ondes de radiofréquence selon la revendication 6 ou 7, dans lequel la structure sandwich dudit plateau réflecteur est essentiellement constituée d'un matériau choisi entre un matériau plastique renforcé par des fibres, un métal léger tel que de l'aluminium et un alliage léger.

9. Réflecteur reconfigurable pour ondes de radiofréquence selon une quelconque des revendications 6 à 8, dans lequel la structure sandwich dudit plateau réflecteur possède une épaisseur comprise entre 15 mm et 30 mm.

10. Réflecteur reconfigurable pour ondes de radiofréquence selon une quelconque des revendications précédentes, dans lequel lesdits actionneurs linéaires sont des actionneurs piézoélectriques.

11. Réflecteur reconfigurable pour ondes de radiofréquence selon une quelconque des revendications précédentes, comprenant au moins dix et de préférence entre dix et cent desdits actionneurs linéaires.

12. Réflecteur reconfigurable pour ondes de radiofréquence selon une quelconque des revendications précédentes, dans lequel les tiges desdits actionneurs linéaires s'étendent perpendiculairement à partir de la surface avant de l'élément de support rigide

13. Réflecteur reconfigurable pour ondes de radiofréquence selon une quelconque des revendications précédentes, dans lequel les tiges desdits actionneurs linéaires sont mobiles de façon axiale, avec une course d'au moins 20 mm, entre une position rétractée, dans laquelle lesdites tiges sont alignées avec la surface avant de l'élément de support rigide ou derrière elle, et une position en saillie, dans laquelle lesdites tiges font saillie à partir de ladite surface avant.

14. Réflecteur reconfigurable pour ondes de radiofréquence selon une quelconque des revendications précédentes, dans lequel les tiges desdits actionneurs linéaires sont mobiles de façon axiale avec une précision de plus de 50 µm.

15. Réflecteur reconfigurable pour micro-ondes selon une quelconque des revendications précédentes, dans lequel ladite membrane réfléchissante déformable de façon élastique est adaptée pour réfléchir des micro-ondes jusqu'à la bande V.

16. Réflecteur reconfigurable pour micro-ondes selon la revendication 15, dans lequel ladite membrane réfléchissante déformable de façon élastique comprend une membrane faite d'un matériau plastique renforcé par des fibres, en utilisant un tissu triaxial ajouré.

17. Réflecteur reconfigurable pour micro-ondes selon la revendication 15, dans lequel ladite membrane réfléchissante déformable de façon élastique comprend une membrane faite de maille métallique.

18. Réflecteur reconfigurable pour ondes de radiofréquence selon une quelconque des revendications précédentes, comprenant en outre des moyens de commande à boucle fermée (CM) pour commander le fonctionnement dudit actionneur linéaire afin d'obtenir une forme déformée prédéterminée de ladite membrane réfléchissante déformable de façon élastique.

19. Système d'antenne à micro-ondes possédant une configuration de faisceau reconfigurable, comprenant un dispositif (ERD) pour émettre et/ou recevoir des micro-ondes (EMW) et au moins un réflecteur reconfigurable de micro-ondes (SR) selon une quelconque des revendications précédentes, ledit réflecteur reconfigurable coopérant avec ledit dispositif pour déterminer ladite configuration de faisceau reconfigurable du système d'antenne.

20. Système d'antenne à micro-ondes selon la revendication 19, dans lequel ledit réflecteur reconfigurable de micro-ondes est un sous-réflecteur (SR), et comprenant en outre un réflecteur principal non reconfigurable (MR) coopérant avec ledit sous-réflecteur pour déterminer ladite configuration de faisceau reconfigurable du système d'antenne.

21. Charge utile de télécommunication d'engin spatial comprenant un système d'antenne à micro-ondes selon la revendication 19 ou 20.
